# NEUE EUROPÄISCHE PATENTSCHRIFT

(11) **EP 0 254 374 B2**
(45) Veröffentlichungstag und Bekanntmachung des Hinweises auf die Entscheidung über den Einspruch: **05.03.1997**
(45) Hinweis auf die Patenterteilung: 12.02.1992
(21) Anmeldenummer: 87201408.9
(22) Anmeldetag: 22.07.1987
(51) Int. Cl.: B29C 51/34, B29C 51/04

(54) **Verfahren und Vorrichtung zum Ziehen eines Kühlschrankinnenbehälters**
Method and apparatus for drawing refrigerator inner liner
Procédé et appareil pour l'étirage d'une cuve interne d'un réfrigérateur

(30) Priorität: 25.07.1986 DE 3625299
(43) Veröffentlichungstag der Anmeldung: 27.01.1988
(73) Patentinhaber: Bauknecht Hausgeräte GmbH, D-70565 Stuttgart (DE); WHIRLPOOL INTERNATIONAL B.V., 5632 KG Eindhoven (NL)
(72) Erfinder: Paul, Claus, D-7265 Neubulach 3 (DE)
(74) Vertreter: Guerci, Alessandro

(56) Entgegenhaltungen:
- DE-A- 1 168 056
- GB-A- 742 516
- US-A- 3 642 416
- US-A- 3 737 498

## Beschreibung

Die Erfindung bezieht sich auf ein Verfahren zum Tiefziehen eines an seiner Rückwand eine Wasser-Ablaufrinne aufweisenden Kühlschrank-Innenbehälters aus Kunststoff unter Aufbringen eines Unterdruckes, bei dem ein der Ablaufrinne entsprechender Rückwandabschnitt des innenbehälters mittels eines in seine Formlage an einer Tiefziehform bringbaren Formstückes sowie mittels einer Halteeinrichtung gestreckt wird. Die Erfindung bezieht sich ferner auf eine Vorrichtung zur Durchführung des Verfahrens.

Es ist ein Verfahren zum Tiefziehen von Formplatten aus Kunststoff mit hinterschnittenen Formleisten bekannt (DE-GM 18 43 375), bei dem Hinterschneidungen bildende Einlegeteile über Zwischenglieder mit der Tiefziehform verbunden sind. Über in der Tiefziehform angeordnete Kipp- und/oder Drehvorrichtungen können die Einlegeteile, bei oder nach dem Herausziehen der Tiefziehform aus der Formplatte, aus deren Hinterschneidungen herausgezogen werden. Abhängig von Form und Tiefe der Hinterschneidungen können an der Formplatte Bereiche unterschiedlicher Wanddicke auftreten. Große Unterschiede in der Wanddicke können bei einem späteren Ausschäumen des Kühlschrankgehäuses zu einer Faltenbildung führen. Weiterhin können beim späteren Gebrauch des Kühlschrankes, beispielsweise beim Reinigen der Ablaufrinne, in Abschnitten mit zu geringer Wanddicke Risse auftreten.

Durch die gattungsbildende US-PS 37 37 498 ist eine Vorrichtung zum Tiefziehen eines Kunststoff-Formteiles bekannt geworden. Diese bekannte Vorrichtung enthält einerseits eine Tiefziehform mit einem daran schwenkbar befestigten Formstück zur Entformung eines Formteiles und andererseits eine Halteeinrichtung zum Festlegen des Formteiles im Bereich des Formstückes. Ferner enthält die bekannte Vorrichtung eine Ansaugvorrichtung zur Erzeugung eines Vakuums, um das zu formende Formteil in die Tiefziehform zu drücken. Mit dieser bekannten Vorrichtung ist es möglich, Hinterschneidungen an dem Kunststoff-Formteil zu fertigen, wobei eine leichte und zuverlässige Entformung des Formteiles gewahrleistet ist.

Der Erfindung liegt die Aufgabe zugrunde, ein Verfahren und eine Vorrichtung der eingangs genannten Art so auszubilden, daß Ablaufrinnen im wesentlichen unabhängig von deren Tiefe und Form so ausgeformt werden können, daß sich über den gesamten Bereich der Wasserablaufrinne eine im wesentlichen gleiche Wandstärke ergibt.

Die Lösung dieser Aufgabe wird durch das im Hauptanspruch gekennzeichnete Verfahren erzielt.

Dadurch, daß das Strecken des Rückwandabschnittes unter Verschwenken des Formstückes in seine Formlage und unter Festlegen eines Bereiches der Rückwand mittels der Halteeinrichtung erfolgt, wird Kunststoff in den angrenzenden Bereich der Ablaufrinne mitgenommen. Dadurdh, daß das Aufbringen des Unterdruckes mit dem Ende des Verschwenkens einsetzt, steht für die Ausformung der Ablaufrinne somit ein relativ großer Abschnitt des Kunststoffs zur Verfügung, so daß sich eine im wesentlichen gleiche Wanddicke für die Ablaufrinne ergibt. Dadurch wird eine Rißbildung beim späteren Gebrauch verhindert und die Stabilität der Wasserablaufrinne erhöht.

Durch die Festlegung eines Bereichs der Rückwand mittels einer Halteeinrichtung wird ein Ausweichen des Kunststoffes während des Streckens des Kunststoffes durch Verschwenken des Formstückes verhindert. Dadurch, daß mit dem erfindungsgemäßen Verfahren eine im wesentlichen gleiche Wanddicke über die Ablaufrinne erzielbar ist und zum Ausformen das Formstück aus dem durch die Ablaufrinne gebildeten Hinterschnitt geschwenkt werden kann, können auch Ablaufrinnen größerer Tiefe als bisher ausgeformt werden. So ist es beispielsweise auch möglich. Ablaufrinnen mit einer optisch ansprechenden, waagerecht verlaufenden Sichtkante auszubilden, unterhalb der die Ablaufrinne von beiden Enden aus jeweils geneigt zur Mitte verläuft, ohne daß die im Mittenbereich entstehende größte Tiefe zu wesentlichen Unterschieden in der Wandstärke oder zu Problemen beim Entformen führt.

Eine bevorzugte Durchführungsform des Verfahrens erfolgt unter Einsatz einer Vorrichtung gemäß dem Anspruch 2.

Bei einer Vorrichtung mit einem als Halteeinrichtung dienenden Gegenhalter ist es vorteilhaft, den Gegenhalter in Richtung auf das Formstück schwenkbar anzuordnen. Dadurch wird Kunststoff an die dem Gegenhalter benachbarte Seite des Formstückes zum Anformen gedrückt und im wesentlichen gleichmäßig gestreckt.

Bei einer bevorzugten Ausführungsform der Vorrichtung weist die Halteeinrichtung die Ansaugeinrichtung zum Erzeugen des Vakuums auf. Durch den Einsatz der für das Tiefziehen vorhandenen Einrichtung zur Erzeugung eines Unterdrucks zwischen der Tiefziehform und dem Kunststoff ist ein Verfahren mit einer Vorrichtung einfach durchführbar.

Das Verfahren und die Tiefziehform werden anhand der Zeichnung beispielhaft erläutert. Es zeigen:
Fig. 1 einen Bereich einer Tiefziehform mit einem Formstück im Schnitt zu Beginn des Ausformens;
Fig. 2 den Bereich der Tiefziehform nach Fig. 1 im Schnitt am Ende des Ausformens.

In einer Tiefziehform 1 ist ein Formstück 2 um eine Achse 3 schwenkbeweglich so gelagert, daß es aus der Tiefzienform 1 geschwenkt werden kann. Das Schwenken des Formstückes 2 erfolgt über einen mit dem Formstück 2 verbundenen Hebel 4 und eine nicht dargestellte Betatigungseinrichtung. Der aus der Tiefziehform 1 infolge des Schwenkens ragende Teil des Formstückes 2 weist eine Rinnenkontur 5 zum Ausformen einer Wasser-Ablaufrinne 5' auf. Zum Ausformen eines Wasserablaufs 6' in der Mitte der Ablaufrinne 5' weist der den Boden der Ablaufrinne 5' bildende Teil der Rinnenkontur 5 einen zylindrichen Ansatz 6 auf.

In Schwenkrichtung aus der Teifziehform 1 ist dem Formstück 2 benachbart ein als Halteeinrichtung 7 dienender Gegenhalter angeordnet. Der Gegenhalter weist einen gegenüber dem Formstück 2 in nicht dargestellter Weise während des Anformens ortsfest verbundenen Stab 9 und einen sich daran unter einem Winkel anschließenden Haltestab 10 mit einer dem Stab 9 gegenüberliegenden Anlagefläche 11 für einen Kunststoff 12 auf. In der dem Formstück 2 zugewandten Seite weist der Haltestab 10 eine Aussparung 13 auf, in die am Ende der Schwenkbewegung die Rinnenkontur 5 teilweise eingreift.

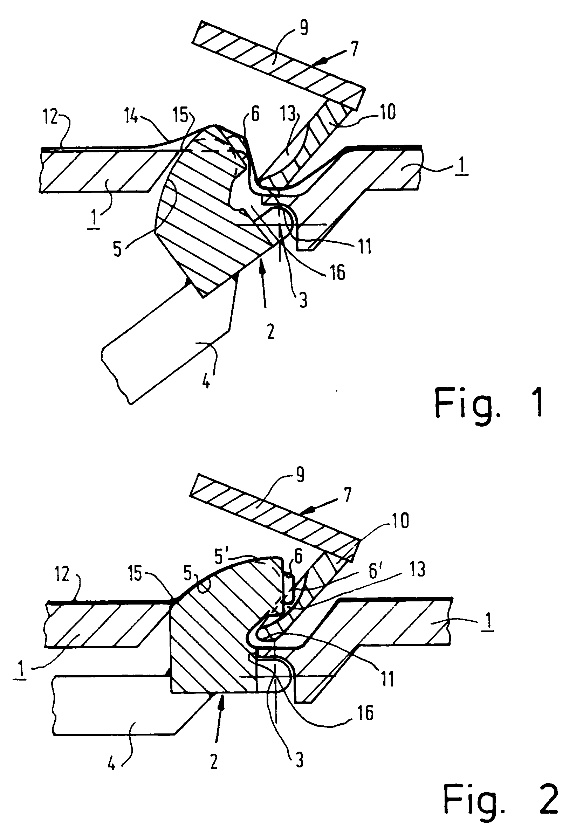

Zu Beginn des Ausformens (Fig. 1) Kommt der Kunststoff 12 in Anlage mit der Tiefzieform 1 und einem über die Tiefziehform 1 vorstehenden Teil der Rinnenkontur 5. Die Anlagefläche 11 des Gegenhalters befindet sich in Schwenkrichtung vor dem Formstück 2 in Anlage mit einem Bereich des Kunststoffs 12, um diesen gegenüber der Schwenkbewegung festzulegen.

Zum Ausformen der Wasserablaufrinne 5' wird das Formstück 2 in Richtung zu dem Gegenhalter geschwenkt. Die Endlage der Schwenkbewegung zeigt Fig. 2. Durch das Schwenken wird ein Teil des die Rückwand des Kunststoff-Innenbehälters bildenden Kunststoffs 14 gestreckt, und es ergibt sich ein Materialnachlauf in Richtung zu dem, den Boden der Wasserablaufrinne 5' bildenden Teil der Rinnenkontur 5. Während der Schwenkbewegung des Formstückes 2 bleibt der in Schwenkrichtung liegende Bereich des Kunststoffs 12 durch die Anlagefläche 11 des Gegenhalters festgelegt. Bei fortschreitender Schwenkbewegung ergibt sich dadurch ein Andrücken des Kunststoffs 2 an die dem Gegenhalter benachbarte Seite der Rinnenkontur 5. Da sich der Kunststoff 12 im Abstand von der Tiefziehform 1 befindet, ist dabei ein Nachlaufen des Kunststoffs zu dem Formstück 2 möglich. Am Ende der Schwenkbewegung greift ein Teil der Rinnenkontur 5 in die Aussparung 13 des Haltestabes 10 ein, wodurch sich ein enger Zwischenraum zwischen der Rinnenkontur 5 und dem Haltestab 10 ergibt.

Bei dem vorliegenden Ausführungsbeispiel ist der als Halteeinrichtung dienende Gegenhalter während des Ausformens gegenüber dem Formstück 2 ortsfest. Es ist aber auch möglich, daß der Gegenhalter während der Schwenkbewegung des Formstückes 2 gegenläufig zu diesem geschwenkt wird.

Ein mit dem Ende der Schwenkbewegung einsetzender Unterdruck zwischen dem Kunststoff 12 und der Tiefziehform 1 bewirkt ein Anliegen des Kunststoffs 12 über den gesamten Bereich der Rinnenkontur 5, wobei, wie in Fig. 2 gezeigt, der Kunststoff 12 von der Anlagefläche 11 wegbewegt wird. Die Breite von Spalten 15, 16 zwischen der Tiefziehform 1 und dem Formstück 2 verkleinert sich mit dem Schwenken des Formstückes 2 auf ein Minimum am Ende der Schwenkbewegung, so daß sie das Ausformen bzw. die Gestalt der fertigen Wasserablaufrinne 5' nicht beeinträchtigen.

## Patentansprüche

1. Verfahren zum Tiefziehen eines an seiner Rueckwand eine Wasser-Ablaufrinne (5') aufweisenden Kuehlschrank-Innenbehaelters aus Kunststoff (12) unter Aufbringen eines Unterdruckes, bei dem ein der Ablaufrinne (5') entsprechender Rueckwandabschnitt (14) des Innenbehaelters mittels eines in seine Formlage an einer Tiefziehform (1) verschwenkbaren Formstueckes (2) sowie mittels einer Halteeinrichtung (7) und unter Aufbringen des mit dem Ende des Verschwenken des Formstueckes eingesetzten Unterdruckes gestreckt wird,wobei ein in der Schwenkbewegungsrichtung vor dem Formstueck liegender Bereich der Rueckwand mittels der Halteeinrichtung festgelegt wird, dadurch gekennzeichnet, dass der Rueckwandabschnitt (14) durch Verschwenken des Formstueckes (2) in seine Formlage, unter Nachlauf des Kunstoffes, gestreckt wird.

2. Vorrichtung zur Durchfuehrung des Verfahrens nach Anspruch 1 mit einer Tiefziehform (1), mit einem zum Entformen eines Formteiles an der Tiefziehform (1) schwenkbaren Formstueck (2), mit einer Halteeinrichtung zum Festlegen des Formteiles im Bereich des Formstueckes (2) und mit einer Ansaugvorrichtung zur Erzeugung eines Vakuums, dadurch gekennzeichnet,
a) dass das Formstueck (2) eine Rinnenkontur (5) zum Ausformen einer Wasser-Ablaufrinne (5') in der Rueckwand eines Kuehlschrank-Innenbehaelters aufweist,
b) dass das Schwenken des Formstueckes (2) ueber einen mit dem Formstueck verbundenen Hebel (4) und eine Betaetigungseinrichtung erfolgt,
c) dass die Halteeinrichtung (7) im Schwenkbereich des Formstueckes (2) liegt und als Gegenhalter ausgebildet ist und
d) dass der winkelfoermig ausgebildete Gegenhalter einen Stab (9) und einen Haltestab (10) mit einer Anlageflaeche (11) fuer einen Kunststoff (12) aufweist, wobei es sich ein Materialnachlauf in Richtung zu dem, den Boden der Wasser-Ablaufrinne (5') bildenen Teil der Rinnenkontur (5) ergibt.

3. Vorrichtung nach Anspruch 2 mit einem als Halteeinrichtung (7) dienenden Gegenhalter, dadurch gekennzeichnet, daß der Gegenhalter in Richtung auf das Formstück (2) schwenkbar angeordnet ist.

4. Vorrichtung nach einem der Ansprüche 2 oder 3, dadurch gekennzeichnet, daß die Halteeinrichtung (7) die Ansaugeinrichtung zum Erzeugen des Vakuums aufweist.

## Claims

1. A method of deep-drawing a refrigerator inner liner which has a water drainage channel (5') at its rear wall from a synthetic material (12) by the application of an underpressure, whereby a rear wall portion (14) of the inner liner corresponding to the drainage channel is stretched out by means of a mould piece (2) which can swivel in a deep-drawing mould (1), by means of a hold-down device (7) and by the application of underpressure at the moment at which the swivelling movement ends, a region of the rear wall corresponding to the mould piece being fixed in the direction of swivelling by means of a hold-down device, characterised in that the rear wall portion (14) is stretched out by swivelling of the mould piece (2) into its moulding position, under movement of the synthetic material.

2. An apparatus for carrying out the method as claimed in Claim 1, comprising a deep-drawing mould(1), a mould piece (2) which can swivel at the deep-drawing mould (1) for stripping of a moulded piece, a hold-down device for fixing the moulded piece in the region of the mould piece (2), and a suction device for generating a vacuum, characterized in that
a) the mould piece (2) has a channel contour (5) for shaping a water drainage channel (5') in the rear wall of a refrigerator inner liner,
b) the swivelling of the mould piece (2) is effected on a lever (4) connected to the mould piece and an actuation mechanism,
c) the hold-down device (7) lies within the swivelling range of the mould piece (2) and is constructed as a countermould, and
d) the countermould, which is of an angled construction, comprises a rod (9) and a retaining bar (10) with a surface (11) for making contact with a synthetic material (12), there being a material flow in the direction of the portion of the channel contour (5) which forms the bottom of the water drainage channel (5').

3. A method as claimed in Claim 2, with a countermould serving as the hold-down device (7), characterized in that the countermould is arranged so that it can swivel towards the mould piece (2).

4. An apparatus as claimed in Claim 2 or 3, characterized in that the hold-down device (7) comprises the suction device for generating the vacuum.

## Revendications

1. Procédé pour l'emboutissage, avec l'aide d'une dépression, d'une cuve interne de réfrigérateur en matière pastique (12) présentant, sur sa paroi postérieure, une rigole d'écoulement d'eau (5') selon lequel une section de la paroi postérieure (14) de la cuve interne correspondant à la rigole d'écoulement d'eau (5') est étirée au moyen d'une forme de pivotement (2), ainsi qu'au moyen d'un dispositif de retenue (7) étant donné que l'application de la dépression débute à la fin du pivotement, la zone de la paroi postérieure correspondant a la forme de pivotement étant ficsé dans la direction de pivotment au moyen d'un dispositif de retenue, caractérisé en ce que une section de la paroi postérieure (14) est étirée au moyen d'une forme de pivotment (2) dans sa position de formage, par le mouvement de la matière plastique.

2. Appareil pou l'exécution du procédé suivant la revendication 1, comportant un moule d'emboutissage (1) équipé d'une forme (2) pouvant pivoter sur le moule d'emboutissage (1) pour le formage d'un moulage, un dispositif de retenue pour immobiliser le moulage dans la zone de la forme (2) et un dispositif d'aspiration pour créer une dépression, caractérisé en ce que:
a) la forme (2) présente un countour de rigole (5) destiné à façonner une rigole d'écoulement d'eau (5') dans la paroi postérieure d'une cuve interne de réfrigérateur,
b) le pivotement de la forme (2) s'effectue par l'intermédiaire d'un levier (4) relié à la forme (2) d'un dispositif d'actionnement.
c) le dispositif de retenue (7) est installé dans la zone de pivotement de la forme (2) et a la forme d'un support de contropartie, et
d) le support de contropartie de configuration angulaire comporte un bras (9) et un bras de retenue (10) présentant une surface d'appui (11) pour une matiere plastique (12) et l'on obtien un deplacement de matière vers la partie du contour de rigole (5) formant le fond de la rigole d'ecoulement d'eau (5')

3. Appareil suivant la revendication 2, comportant un support de contrepartie servant de dispositif de retenue (7), caractérisé en ce que le support de contrepartie est monté de manière à pouvoir pivoter vers la forme (2).

4. Appareil suivant la revendication 2 ou 3, caractérisé en ce que le dispositif de retenue (7) comporte le dispositif d'aspiration créant la dépression.
